(19) Europäisches Patentamt
European Patent Office
Office européen des brevets

(11) **EP 3 939 854 B1**

(12) **FASCICULE DE BREVET EUROPEEN**

(45) Date de publication et mention de la délivrance du brevet:
**27.12.2023 Bulletin 2023/52**

(21) Numéro de dépôt: **21185822.0**

(22) Date de dépôt: **15.07.2021**

(51) Classification Internationale des Brevets (IPC):
**B61H 5/00** *(2006.01)* **F16D 65/12** *(2006.01)*

(52) Classification Coopérative des Brevets (CPC):
**F16D 65/847; B61H 5/00; F16D 65/121;**
**F16D 65/123; F16D 65/124; F16D 65/128;**
F16D 2065/1312; F16D 2065/132;
F16D 2065/1328; F16D 2065/1356;
F16D 2065/1392

(54) **ENSEMBLE DE DISQUE POUR FREIN À SEGMENTS**

SCHEIBENANORDNUNG FÜR BACKENBREMSE

DISC ASSEMBLY FOR A BRAKE WITH SEGMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.07.2020 FR 2007517**

(43) Date de publication de la demande:
**19.01.2022 Bulletin 2022/03**

(73) Titulaire: **ALSTOM Holdings**
**93400 Saint-Ouen-sur-Seine (FR)**

(72) Inventeurs:
• **HAROUNI, Mohammed**
**78114 MAGNY LES HAMEAUX (FR)**
• **VALETTE, Lionel**
**71200 LE CREUSOT (FR)**
• **MANN, Ruddy**
**71460 SAINT MARTIN DU TARTRE (FR)**
• **DAVION, Philippe**
**89100 SENS (FR)**
• **KAKANOUKILI, Jean-Jacques**
**89100 SENS (FR)**

(74) Mandataire: **Lavoix**
**2, place d'Estienne d'Orves**
**75441 Paris Cedex 09 (FR)**

(56) Documents cités:
WO-A1-95/30841    WO-A1-2015/090890
NL-A- 7 708 013

**Description**

La présente invention concerne un ensemble de disque pour frein comprenant un moyeu central d'entraînement et un disque d'usure comprenant une première face et une deuxième face, les faces étant maintenues ensemble axialement autour du moyeu, chaque face présentant une surface interne respective faisant face à la surface interne de l'autre face, chaque face étant formée d'au moins deux segments distincts, chaque segment s'étendant entre deux bords radiaux.

Le document FR 2 359 321 décrit un ensemble pour freins à disque comprenant un moyeu central d'entraînement et deux couronnes d'usure divisées en demi-couronnes. Les demi-couronnes sont assemblées au moyen de vis.

Cependant, en cas d'augmentation de la température, l'ensemble se dilate.

Les vis maintenant les couronnes d'usure, la dilatation génère des contraintes thermomécaniques autour de la vis.

De plus, la déformation des couronnes maintenues ensemble au niveau des vis entraîne un déjettement de l'ensemble, ce qui peut entraîner des dysfonctionnements du système de freinage.

WO 95/30841 A1 décrit un disque de frein d'essieu monté sur des véhicules ferroviaires. Le disque de frein comprend deux anneaux de friction reliés au moyeu et comprenant des ailettes de refroidissement réparties sur leur périphérie, du côté opposé à la face de friction.

WO 2015/090890 A1 décrit un disque de frein pour roue de véhicule ferroviaire, comprenant sur un côté une pluralité d'éléments de refroidissement.

Un but de l'invention est donc de fournir un ensemble de disque pour frein permettant d'éviter un déjettement en cas de changement de température.

Dans ce but, l'objet de l'invention est un ensemble de disque pour frein du type précité, comme défini dans la revendication indépendante 1 ci-jointe, dans lequel les bords radiaux des segments d'une face ne s'étendent pas en regard des bords radiaux des segments de l'autre face, chaque segment de face étant apte à être fixé à un segment de l'autre face via au moins un organe de fixation propre à maintenir lesdites faces ensemble.

L'ensemble de disque pour frein peut en outre présenter une ou plusieurs des caractéristiques ci-dessous, considérée(s) individuellement ou selon toutes les combinaisons techniquement possibles :

- chaque organe de fixation comprend pour chaque segment de face auquel il est associé au moins un crochet positionné sur la surface interne dudit segment apte à coopérer avec un crochet correspondant d'un segment de l'autre face ;
- chaque organe de fixation comprend une bague s'étendant entre les deux faces, la bague traversant, parallèlement à l'axe de rotation du moyeu, chaque segment auquel elle est associée via un orifice respectif, un rapport entre le diamètre de la bague, mesurée au niveau dudit orifice respectif, et le diamètre de l'orifice respectif étant compris entre 90% et 99 %, de préférence entre 95 % et 99 % ;
- chaque organe de fixation comprend une vis et un écrou, la vis étant propre à traverser un orifice de passage délimité par la bague et à être associée à l'écrou, la vis comprenant une tête en regard d'un bord d'un orifice de l'un des segment auquel la bague est associée et l'écrou étant positionné en regard d'un bord de l'orifice de l'autre segment auquel la bague est associée, l'écrou et la vis étant propre lors de leur serrage à exercer un effort sur la bague parallèlement à l'axe de rotation du moyeu, un rapport entre la distance entre la tête de la vis et l'écrou mesurée parallèlement à l'axe de rotation du moyeu et la distance entre les bords des orifices auxquels la bague est associée est compris entre 101 % et 110 %, de préférence entre 104 % et 107 % ;
- l'ensemble comprend, pour chaque bord radial de chacun des segments de chaque face, au moins un organe de fixation positionné entre ledit bord radial et un bord radial d'un autre segment de la même face adjacent audit bord radial ;
- chaque segment comprend au moins une patte de fixation au moyeu, chaque patte de fixation délimitant un orifice de fixation traversant entre la surface interne et la surface externe, dans lequel chaque patte de fixation présente une surface interne et une surface externe, la surface interne d'une patte de fixation étant face à une surface interne d'une patte de fixation d'un segment opposé, les orifices de fixation de pattes de fixation coopérant l'une avec l'autre étant alignés, l'ensemble comprenant pour chaque paire d'orifices de fixation coopérant l'un avec l'autre un dispositif de fixation, le dispositif de fixation comprenant un manchon de fixation muni de deux portions d'extrémité opposées, propres à être insérées chacune respectivement dans l'un des orifices de fixation ;
- les portions d'extrémité et les orifices de fixation sont de forme oblongue ;
- chaque segment comprend une patte de fixation centrale et deux pattes de fixation distales disposées de part et d'autre de la patte de fixation centrale, chaque orifice de fixation des pattes centrale et distales d'un même segment ayant une forme oblongue suivant un premier axe longitudinal respectif perpendiculaire à un axe central traversant ledit orifice de fixation, le premier axe longitudinal de chaque orifice de fixation formant un angle non nul par rapport au premier axe longitudinal des autres orifices de fixation ;
- la longueur maximale de chacun des orifices de fixation des pattes de fixation distales mesurée suivant le premier axe longitudinal correspondant est comprises entre 102% et 108% de la longueur maximale des portions d'extrémités destinées à être insérées dans lesdits orifices, la portion d'extrémité formant avec un bord de l'orifice de fixation auquel elle est associée un espace libre du côté de la patte de fixation centrale ;

- pour chaque manchon, chaque portion d'extrémité est de forme oblongue suivant un deuxième axe longitudinal perpendiculaire à un axe central dudit manchon, les axes longitudinaux de chaque portion d'extrémité formant l'un avec l'autre un angle compris entre 10° et 70° de préférence entre 15° et 25° ;

- chaque dispositif de fixation comprend un élément de fixation associé propre à être inséré dans ledit manchon, le moyeu comprenant au moins une patte de solidarisation s'étendant contre une patte de fixation, l'élément de fixation comprenant un corps central propre à traverser le manchon et la patte de solidarisation et une tête s'étendant contre la paroi de solidarisation à une extrémité du corps ;

- chaque face comprend un même nombre déterminé de segments, chaque segment ayant une étendue angulaire égale pour tous les segments de la face, et dans lequel le décalage angulaire entre des segments de faces se faisant face est sensiblement égal au rapport de l'étendue angulaire d'un des segments sur le nombre de segments ;

- chaque crochet comprend au moins une partie principale et un épaulement, l'épaulement s'étendant suivant une direction sensiblement parallèle à la direction tangentielle locale de la face à partir d'un bord supérieur de la partie principale, l'épaulement étant séparé de la surface interne par la partie principale,

- les crochets d'une même face sont situés sur un cercle, les épaulements des crochets étant orientés dans le même sens sur le cercle,

- au moins un des organes de fixation s'étend à proximité du bord extérieur d'une des faces,

- chaque face comprend trois segments présentant chacun une étendue angulaire sensiblement égale à 120°, le décalage angulaire entre les bords radiaux de deux segments se faisant face étant sensiblement égal à 40°,

- la surface interne de chaque face présente des ailettes de ventilation, les ailettes de ventilation des faces se correspondant telles que les ailettes d'une des faces se superposent avec les ailettes de l'autre des faces ; et/ou

- les faces sont liées au moyeu par des éléments de fixation, l'ensemble comprenant au moins un manchon pour chaque élément de fixation entre ledit élément de fixation et la ou les face(s).

L'invention concerne en outre un véhicule ferroviaire, comme défini dans la revendication 12 ci-jointe, comprenant un système de freinage à disque comprenant un ensemble de disque tel que décrit précédemment.

D'autres caractéristiques et avantages de l'invention ressortiront de la description détaillée qui en est donnée ci-dessous, à titre indicatif et nullement limitatif, en référence aux figures annexées, parmi lesquelles :

- la figure 1 est une représentation schématique en perspective d'un premier mode de réalisation d'un ensemble de disque selon l'invention, dans lequel un segment est manquant,
- la figure 2 est une représentation schématique en perspective du segment manquant de la figure 1,
- la figure 3 est une vue de haut de l'ensemble de la figure 1,
- la figure 4 est une représentation schématique en perspective de l'ensemble de la figure 1 sans le moyeu et les organes de fixation,
- la figure 5 est une représentation schématique en perspective d'un détail de crochets de l'ensemble de la figure 1,
- la figure 6 est une représentation schématique en perspective d'un deuxième mode de réalisation d'un ensemble de disque selon l'invention, dans lequel un segment est manquant,
- la figure 7 est une représentation schématique en perspective de l'ensemble de la figure 6 dans lequel deux segments sont manquants,
- la figure 8 est une vue schématique de haut d'un segment de l'ensemble de la figure 6, ainsi que de manchons et organes de fixation correspondants, et
- la figure 9 est une représentation schématique en perspective d'un manchon de l'ensemble de la figure 6.

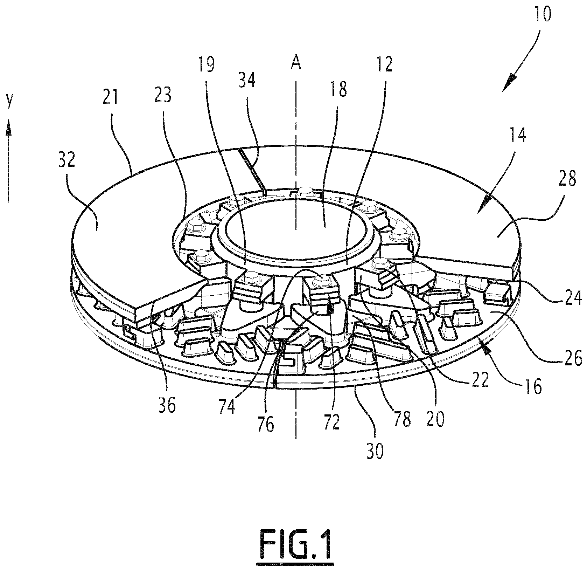

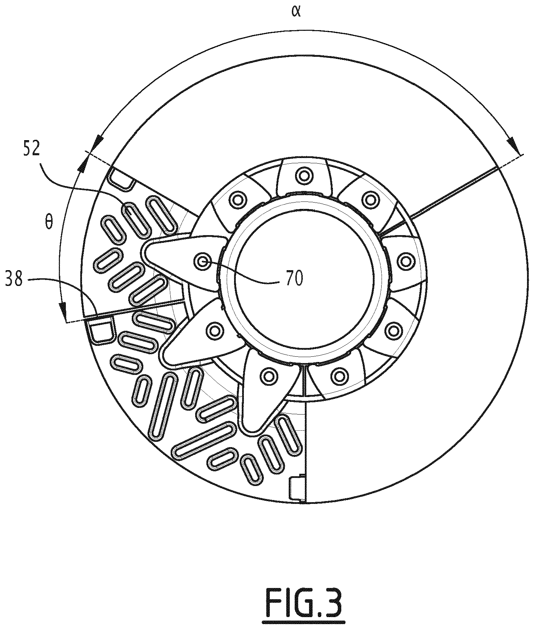

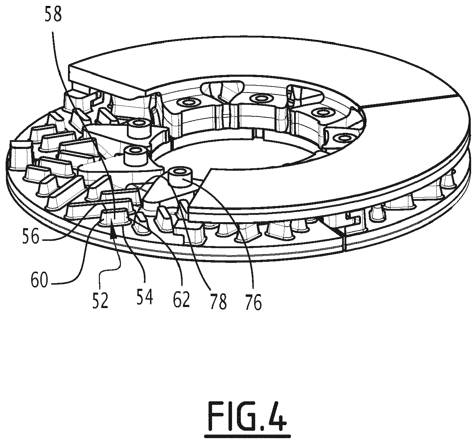

Un ensemble 10 de disque pour frein selon un premier mode de réalisation de l'invention est représenté sur les figures 1 à 5.

Un tel ensemble 10 de disque est adapté pour un système de freinage à disque, par exemple, compris dans un véhicule ferroviaire. La structure, en dehors de l'ensemble 10 de disque, et le fonctionnement d'un tel système de freinage sont connus et ne seront pas décrits plus en détail ici.

L'ensemble 10 comprend un moyeu central 12 d'entraînement et un disque d'usure.

Le disque comprend une première face et une deuxième face 14, 16.

Les faces 14, 16 sont maintenues ensemble axialement autour du moyeu 12.

Le moyeu 12 est adapté pour être relié à un essieu 18 de manière à transmettre la rotation de l'essieu à la roue.

Le moyeu 12 comprend, par exemple, un anneau sensiblement cylindrique s'étendant autour d'un axe s'étendant selon une direction dite transversale Y, appelé par la suite axe de rotation A.

La direction transversale Y est la direction principale de l'essieu.

Le moyeu 12 présente, par ailleurs, une pluralité de pattes de solidarisation 20 s'étendant depuis une surface externe de l'anneau. Chaque patte de solidarisation 20 s'étend selon une direction radiale respective perpendiculaire à la direction transversale Y. La patte de solidarisation 20 s'étend ici à proximité d'un bord dit supérieur 19 de la surface externe de l'anneau selon la direction transversale Y.

Les pattes de solidarisation 20 ont une répartition angulaire uniforme autour du moyeu 12, c'est-à-dire que l'angle entre des pattes de solidarisation 20 adjacentes est constant.

Chaque patte de solidarisation 20 présente un orifice traversant 22, l'orifice 22 traversant la patte de solidarisation 20 selon la direction transversale Y. Plus particulièrement, l'orifice 22 est un trou cylindrique d'axe s'étendant selon la direction transversale Y.

Les pattes de solidarisation 20 permettent notamment de fixer les faces 14, 16 du disque au moyeu comme expliqué par la suite.

Les faces 14, 16 sont par exemple identiques.

Chaque face 14, 16 présente un bord extérieur 21.

Chaque face 14, 16 a la forme générale d'un anneau s'étendant autour de l'axe de rotation A, de sorte qu'il présente également un bord intérieur 23 et que les bords intérieur et extérieur 23, 21 sont des cercles, le diamètre du bord intérieur 23 étant inférieur à celui du bord extérieur 21.

Chaque face 14, 16 présente une surface interne 24, 26 respective et une surface externe 28, 30 respective.

La surface interne 24, 26 des faces 14, 16 se font face l'une à l'autre.

Chaque face 14, 16 est formée d'au moins deux, plus particulièrement ici trois, segments 32 distincts.

Chaque face 14, 16 comprend un même nombre déterminé n de segments, ici égal à trois.

Chaque segment 32 est fait d'une pièce et est, par exemple, moulé ou obtenu par forgeage.

Les segments 32 sont réalisés en acier forgé, plus particulièrement de l'acier comprenant du chrome (Cr) et du molybdène (Mo) et avantageusement du vanadium (V) de manière à élever la température de surchauffe, plus particulièrement de l'acier 28CrMoVa0508.

Les segments 32 d'une même face 14, 16 sont ici identiques. Dans le mode de réalisation présenté, les segments 32 des deux faces du disque sont également identiques entre eux.

Chaque segment 32 est une portion de la face 14, 16 découpée selon des plans radiaux, s'étendant selon une direction radiale de la face et la direction transversale Y.

Chaque segment 32 s'étend entre deux bords radiaux 34, 36.

On définit l'étendue angulaire $\alpha$ d'un segment comme l'angle formé par le segment 32 entre ses deux bords radiaux 34, 36.

Chaque segment 32 présente une étendue angulaire $\alpha$ égale pour tous les segments d'une même face 14, 16, plus particulièrement pour tous les segments de la première et de la deuxième faces 14, 16.

Chaque segment présente ici une étendue angulaire $\alpha$ sensiblement égale à 120°, plus particulièrement comprise entre 115° et 120°.

Les segments 32 d'une même face ne sont pas jointifs, de sorte qu'il existe un espace 38 entre deux segments adjacents. Cet espace a une dimension, par exemple, comprise entre 0 mm et 5mm. Cet espace permet notamment un léger jeu entre les segments et éventuellement une dilatation des segments à ce niveau, par exemple, due à une augmentation de la température.

L'ensemble des segments 32 d'une face forme un anneau continu à l'exception des espaces 38 entre les segments.

Les bords radiaux 34, 36 des segments de la première face 14 ne s'étendent pas en regard des bords radiaux des segments de la deuxième face 16, c'est-à-dire que les segments d'une face sont décalés angulairement par rapport aux segments de l'autre face.

On définit le décalage angulaire $\theta$ entre les bords radiaux de deux segments de faces opposées comme l'angle minimal entre lesdits bords radiaux. On définit le décalage angulaire $\theta$ entre deux segments de faces opposées comme le décalage angulaire minimal entre les bords radiaux des deux segments.

Dans le cas présent, le décalage angulaire $\theta$ entre des segments 32 se faisant face est égal à $\alpha$ divisé par n, soit $\frac{\alpha}{n}$, $\alpha$ étant l'étendue angulaire d'un segment et n le nombre de segments par face.

Dans l'exemple représenté, le décalage angulaire $\theta$ entre les bords de deux segments 32 se faisant face est sensiblement égal à 40°, à l'espace 38 près.

Le décalage angulaire permet notamment d'avoir une continuité mécanique de l'ensemble formé des deux faces. En effet, si les deux faces présentaient des segments ayant des bords radiaux alignés selon la direction transversale Y alors un plan comprenant les espaces entre les faces représenterait un plan de faiblesse mécanique de l'ensemble de disque.

Chaque segment 32 de face est apte à être fixé à un segment de l'autre face via au moins un organe de fixation propre à maintenir lesdites faces 14, 16.

Plus particulièrement ici, chaque segment 32 comprend sur la surface interne 26 de la face au moins un crochet 40, 42, plus particulièrement ici deux crochets 40, 42 par segment 32.

Chaque crochet est apte à coopérer avec un crochet correspondant de l'autre face pour maintenir lesdites faces 14, 16 ensemble.

Chaque organe de fixation comprend alors pour chaque segment 32 de face auquel il est associé au moins un crochet 40, 42 positionné sur la surface interne 24, 26 dudit segment 32 apte à coopérer avec un crochet

40, 42 correspondant d'un segment 32 de l'autre face 14, 16.

Chaque crochet 40, 42 s'étend à proximité du bord extérieur 30 d'une des faces 14, 16, plus particulièrement à une distance inférieure à 7,0 mm du bord 21.

Les crochets 40, 42 d'une même face 14, 16 sont situés sur un même cercle, le cercle étant ici coaxial avec la face.

Chaque crochet 40, 42 comprend au moins une partie principale 44, 46 et un épaulement 48, 50. La partie principale 44, 46 s'étend depuis la surface interne 24, 26. L'épaulement 48, 50 s'étend à partir d'un bord supérieur de la partie principale 44, 46, l'épaulement étant séparé de la surface interne 26 par la partie principale 44, 46.

L'épaulement 48, 50 s'étend suivant une direction sensiblement perpendiculaire à la direction radiale locale de la face 14, 16. Les épaulements 48, 50 des crochets 40, 42 d'une même face sont orientés dans le même sens sur le cercle.

L'épaulement 48, 50 a ici la forme d'un pavé.

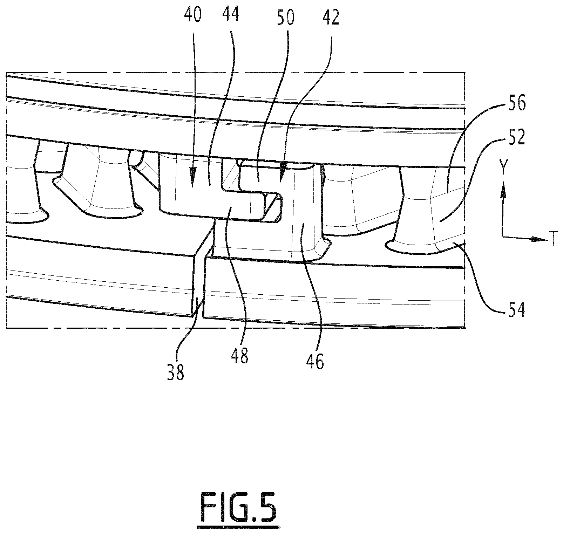

Le crochet 40, 42 est susceptible d'être dans une de deux formes différentes : une première forme et une deuxième forme. Un crochet selon la première forme est ici adapté pour coopérer avec un crochet selon la deuxième forme, comme visible sur la figure 5.

Plus particulièrement, chaque segment 32 présente un premier crochet 40 selon la première forme et un deuxième crochet 42 selon la deuxième forme, tel que les crochets de première et deuxième formes soient alternés sur la face afin qu'ils puissent coopérer avec les crochets de première et deuxième formes de l'autre face.

Dans un crochet 40 ayant la première forme, la partie principale 44 a la forme d'un pavé rectangulaire. Le crochet 40 a ainsi une forme de L dont une première branche est formée de la partie principale 44 et une deuxième branche de l'épaulement 48. L'épaulement 48 s'étend face à la surface interne.

Dans un crochet 42 ayant la deuxième forme, la partie principale 46 a une forme de pavé en L, une première branche s'étendant contre la surface interne du disque et une deuxième branche s'étendant perpendiculairement à ladite surface interne. La forme générale du crochet est ainsi un U dont les côtés sont susceptibles d'avoir des dimensions différentes. L'épaulement 50 fait face à la première branche de la partie principale 46.

L'épaulement 48, 50 d'un crochet 40, 42 est reçu entre l'épaulement 50, 48 du crochet correspondant 42, 40 et le disque du crochet correspondant 42, 40.

Plus particulièrement, l'épaulement 50 d'un crochet 42 ayant la deuxième forme est reçu entre l'épaulement 48 du crochet correspondant 40, ayant la première forme, et la surface interne de la face comprenant le crochet 40 ayant la première forme. La dimension de l'épaulement 50 d'un crochet 42 ayant la deuxième forme selon la direction transversale Y est strictement supérieure à la distance entre l'épaulement 48 d'un crochet 40 ayant la première forme à la surface interne.

L'épaulement 48 d'un crochet 40 de la première forme est reçu entre l'épaulement 50 et la première branche de la partie principale 46 du crochet correspondant 42, ayant la deuxième forme. La dimension de l'épaulement 48 d'un crochet 40 ayant la première forme selon la direction transversale Y est sensiblement égale à la distance entre l'épaulement 50 et la première branche de la partie principale 46 d'un crochet 42 ayant la deuxième forme, c'est-à-dire ici comprise entre ladite distance et ladite distance augmentée de 5%. Il existe, par exemple, un jeu entre l'épaulement 48 du crochet 40 et le crochet 42, ici compris entre 0,1 et 0,2mm.

Cela permet notamment de maintenir les faces ensemble selon la direction transversale Y, de manière à former le disque d'usure.

La forme de crochet permet notamment un jeu selon un plan perpendiculaire à l'axe A du moyen de connexion des deux faces 14,16.

En particulier, dans l'exemple représenté, il existe un jeu selon la direction tangentielle T, c'est-à-dire perpendiculaire à la direction radiale et à la direction transversale Y, entre l'épaulement d'un crochet et le crochet correspondant au niveau dudit épaulement.

La surface interne 24, 26 de chaque face 14, 16 présente, par ailleurs, des ailettes 52 de ventilation.

Les ailettes de ventilation 52 des faces 14, 16 se correspondent telles que les ailettes d'une des faces 14 se superposent avec les ailettes de l'autre des faces 16.

Plus particulièrement, chaque ailette 52 a une forme identique à l'ailette correspondante.

Les ailettes de ventilation sont allongées telles qu'elles définissent chacune une direction principale respective dans le plan perpendiculaire à la direction transversale Y.

Chaque ailette 52 s'étend dans la direction Y entre une base 54 au niveau de la surface interne 24, 26 et un sommet 56 faisant face à la surface interne 24, 26 de la face opposée.

L'ensemble des ailettes 52 d'une face ont la même dimension selon la direction transversale Y tel que les sommets 56 des ailettes 52 d'une même face s'étendent sensiblement dans un même plan.

Les ailettes 52 en vis-à-vis sur les deux faces adjacentes 24 et 26, sont en contact sur l'ensemble de leur sommet respectif 56.

La base 54 et le sommet 56 ont chacun une forme oblongue, le sommet 56 étant ici compris dans la projection de la base selon la direction transversale Y, c'est-à-dire que le sommet 56 présente une surface inférieure à celle de la base.

Plus particulièrement, la surface de l'ailette diminue progressivement de la base au sommet. En d'autres termes, l'ailette 52 présente une section de dimension décroissante de la base 54 au sommet 56.

Dans l'exemple représenté, chaque section de l'ailette 52 selon un plan perpendiculaire à la direction transversale Y a une partie centrale 58 et deux parties d'extrémité 60, 62 de part et d'autre de la partie centrale 58, la partie centrale 58 étant un rectangle et les deux parties d'extrémité 60, 62 formant des demi-cercles ayant pour diamètre un des côtés du rectangle. Le diamètre des demi-cercles décroît strictement de la base 54 au sommet 56. Les côtés du rectangle ne formant pas les diamètres des demi-cercles ont une dimension constante de la base 54 au sommet 56.

La forme des ailettes permet notamment un refroidissement optimal du disque tout en favorisant le contact entre les différents secteurs des faces du disque pour sa tenue mécanique.

Les ailettes 52 d'un même segment sont réparties sur la surface interne 24, 26 par rangées selon la direction radiale du disque. Les ailettes 52 d'une même rangée sont parallèles les unes par rapport aux autres.

La direction principale, prise dans le plan perpendiculaire à la direction transversale Y, des ailettes 52 présente un angle compris entre -55° et +55° par rapport à la direction radiale locale, plus particulièrement un angle égal à +35° ou - 35°, +45° ou -45° ou +55° ou -55°.

Les ailettes 52 d'une rangée présentent ici un angle par rapport à la direction radiale respective opposé à celui des ailettes 52 de chacune des rangées adjacentes. Entre deux rangées adjacentes, il existe un axe radial tel que la direction principale des ailettes d'une des deux rangées est le symétrique de la direction principale des ailettes de l'autre des deux rangées par rapport audit axe radial.

Une telle répartition des ailettes permet d'obtenir des symétries dans la répartition et une réduction de la consommation d'énergie due à la ventilation.

Chaque segment 32 comprend au moins une patte de fixation 64, plus particulièrement ici trois pattes de fixation, au niveau du bord intérieur 23.

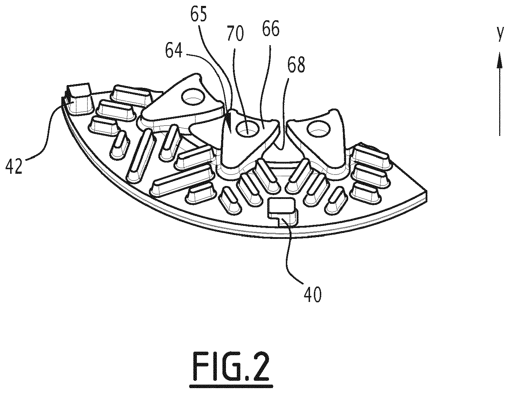

Chaque segment 32 comprend, plus particulièrement, une patte de fixation centrale et deux pattes de fixation distales disposées de part et d'autre de la patte de fixation centrale, comme représenté sur la figure 2.

Les segments 32 formant une face présentent autant de pattes de fixation 64 que le moyeu 12 présente de pattes de solidarisation 20.

Les pattes de fixation 64 d'un segment 32 ont une répartition angulaire uniforme le long du bord intérieur 23 du segment.

Chaque patte de fixation 64 s'étend partiellement en dehors de la forme d'anneau de la face, à l'intérieur de l'espace délimité par ledit anneau. Plus particulièrement, entre 40% et 60% de la dimension maximale de la patte de fixation 64 selon la direction radiale locale est fixé à la surface interne dans la forme de l'anneau et entre 40% et 60% de ladite dimension est en dehors de la forme d'anneau.

Chaque patte de fixation 64 est en contact avec le moyeu 12 au niveau d'un bord interne 65. Cela permet notamment de centrer les différents secteurs du disque afin de faciliter le montage et l'équilibrage de l'ensemble.

Dans l'exemple représenté, chaque patte de fixation 64 a une forme sensiblement triangulaire selon le plan perpendiculaire à la direction transversale Y, dont un sommet est sur l'anneau, le côté du triangle opposé audit sommet étant le bord interne 65 en contact avec le moyeu 12.

Chaque patte de fixation 64 est apte à coopérer avec une patte de fixation d'un segment opposé.

Chaque patte de fixation 64 présente une surface interne 66 et une surface externe 68, la surface interne 66 d'une patte de fixation 64 étant face à une surface interne d'une patte de fixation d'un segment opposé.

Plus particulièrement, la surface interne 66 de chaque patte de fixation 64 est en contact avec la surface interne de la patte de fixation avec laquelle elle coopère du segment opposé.

Chaque patte de fixation 64 a ici une dimension selon la direction transversale Y tel que sa surface interne 66 est dans un même plan que le sommet 56 des ailettes 52 du segment 32.

La partie de la patte de fixation 64 en dehors de l'anneau délimite un orifice de fixation traversant 70 entre la surface interne 66 et la surface externe 68. L'orifice de fixation 70 s'étend ici selon la direction transversale Y.

Les orifices de fixation 70 ont des dimensions perpendiculairement à la direction transversale Y strictement supérieures aux orifices 22 des pattes de solidarisation 20 du moyeu 12.

Les orifices de fixation 70 de pattes de fixation 64 coopérant l'une avec l'autre sont alignés.

Les pattes de fixation 64 ont une distribution telle que chaque patte de fixation 64 de segment 32 est alignée avec une patte de solidarisation 20 du moyeu 12 et réciproquement.

L'ensemble 10 comprend par ailleurs un dispositif de fixation 72 pour lier les faces 14, 16 au moyeu 12.

Le dispositif de fixation 72 comprend au moins un, ici une pluralité, d'éléments de fixation 74, au moins un, ici une pluralité, de manchons 76 et avantageusement une rondelle de fixation 78.

La rondelle de fixation 78 a la forme générale d'un anneau ayant un diamètre extérieur sensiblement égal au diamètre intérieur de la deuxième face 16.

La dimension radiale de la rondelle de fixation 78 est égale à la dimension radiale maximale des pattes de fixation 64 de la deuxième face 16 en dehors de l'anneau.

La rondelle de fixation 78 comprend une pluralité de segments, plus particulièrement autant de segments que la deuxième face 16 a de segments.

Chaque segment de la rondelle de fixation 78 coopère avec un segment 32 de la deuxième face 16 correspondante. Plus particulièrement, le diamètre extérieur du segment de la rondelle de fixation 78 s'étend contre le bord intérieur 23 du segment 32 de la deuxième face 16 sur l'étendue angulaire du segment.

La rondelle de fixation 78 s'étend ainsi dans la continuité de l'anneau de la deuxième face 16 dans l'intérieur dudit anneau.

La rondelle de fixation 78 s'étend contre la surface externe 68 des pattes de fixation 64.

Chaque segment de la rondelle de fixation 78 délimite autant d'orifices traversants suivant la direction transversale Y que la deuxième face 16 comprend de pattes de fixation 64. Les orifices traversants de la rondelle de fixation 78 sont alignés suivant la direction transversale Y avec les orifices de fixation 70 des pattes de fixation 64.

Les orifices de la rondelle de fixation 78 ont des dimensions perpendiculairement à la direction transversale Y similaires aux orifices 22 des pattes de solidarisation 20 du moyeu 12.

Les rondelles permettent notamment de reprendre les efforts centrifuges afin de soulager les fixations. Elles permettent en outre de lier les faces du disque.

Chaque élément de fixation 74 comprend, par exemple, une vis ou un boulon ou un goujon ou une cheville. Cela permet notamment une facilité de montage, par rapport à des moyens de fixation comme la presse. En cas d'usure d'un ou de segments, il est ainsi aisé de remplacer le ou les segments concernés en retirant simplement les éléments de fixation 74, sans que cela nécessite par ailleurs de séparer le moyeu de l'essieu.

Chaque élément de fixation 74 traverse une patte de solidarisation 20 du moyeu 12 via l'orifice traversant 22, les pattes de fixation 64 correspondantes des segments 32 de chacun de la première face 12 et de la deuxième face 14 par les orifices de fixation 70 et, le cas échéant, l'orifice correspondant de la rondelle de fixation 78. L'élément de fixation 74 s'étend principalement selon la direction principale desdits orifices 22, 70, c'est-à-dire ici selon la direction transversale Y.

Les dimensions des pattes de fixation 64 et des pattes de solidarisation 20 sont telles que la patte de solidarisation 20 du moyeu 12 est en contact avec la patte de fixation 64 correspondante de la première face 14, la première face 14 étant en contact avec la deuxième face 16 au niveau des pattes de fixation 64 respectives.

L'élément de fixation 74 comprend, dans l'exemple représenté, une tête et un corps central.

Le corps central est propre à traverser la patte de fixation 64 et la patte de solidarisation 20.

Le corps central traverse les orifices 22, 70.

La tête s'étend contre la patte de solidarisation 20 du moyeu 12 à une extrémité du corps.

Le diamètre de l'élément de fixation 74 est tel qu'un espace est présent entre l'élément de fixation 74 et les bords des orifices 22, 70 qu'il traverse.

Dans l'exemple représenté, le dispositif de fixation 72 comprend un manchon 76 pour chaque élément de fixation 74.

Le manchon 76 entoure l'élément de fixation 74 respectif.

Plus particulièrement, ledit manchon 76 s'étend dans l'espace entre l'élément de fixation 74 et les bords des orifices de fixation 70 des pattes de fixation traversées par ledit élément de fixation 74, plus particulièrement axialement entre la patte de solidarisation 20 et la rondelle de fixation 78.

Le corps central de l'élément de fixation 74 est ici propre à traverser le manchon 76 et la patte de solidarisation 20.

Chaque manchon 76 est ici muni de deux portions d'extrémité opposées. Chaque portion d'extrémité est propre à être insérée dans l'un des orifices de fixation 70 d'une patte de fixation 64 associée.

Le diamètre de l'orifice de fixation 70 de ladite patte de fixation 64 est comprise entre 100% et 108% du diamètre de la portion d'extrémité destinée à être insérée dans ledit orifice.

Les manchons 76 sont réalisées en acier, plus particulièrement en acier dur comprenant du chrome et du molybdène, plus particulièrement de l'acier 42CrMo4.

En variante, le dispositif de fixation 72 comprend une pluralité de manchons autour d'au moins un des organes de fixation, les manchons étant placés à la suite des autres le long de l'élément de fixation selon la direction transversale Y.

L'utilisation de manchons 76 permet notamment d'assurer la liberté des segments et de réduire les contraintes s'appliquant sur les éléments de fixation 74, permettant notamment d'utiliser des fixations du type vis, boulon, goujon ou cheville.

Le maintien des faces du disque par des crochets permet une certaine liberté de déformation sur le plan perpendiculaire à l'axe A.

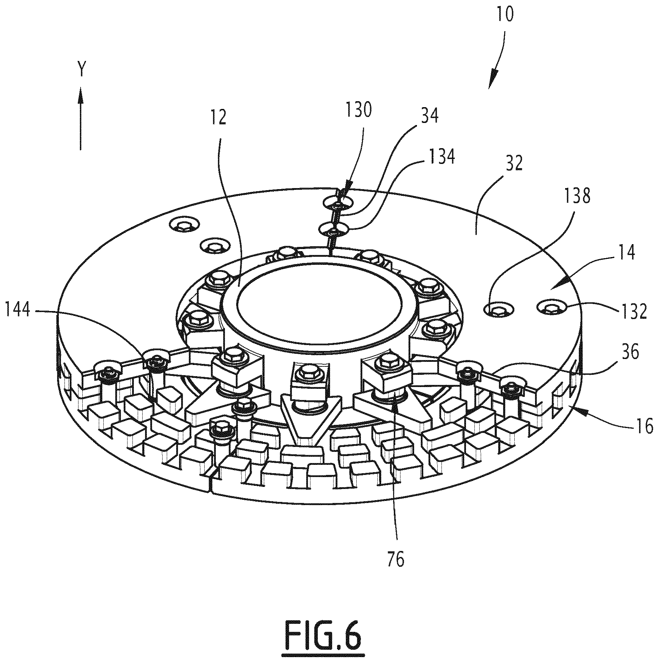

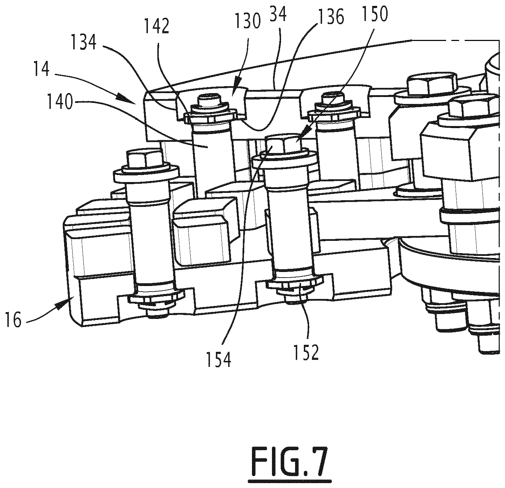

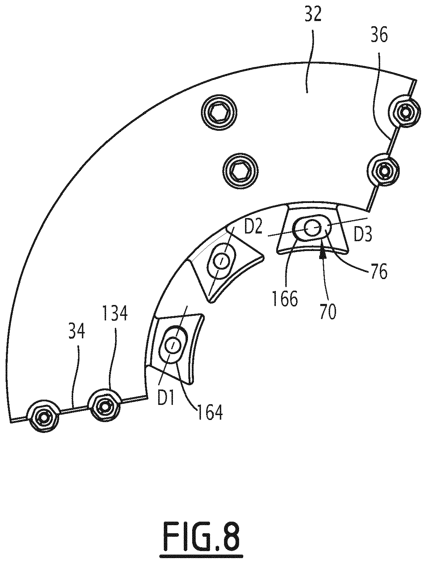

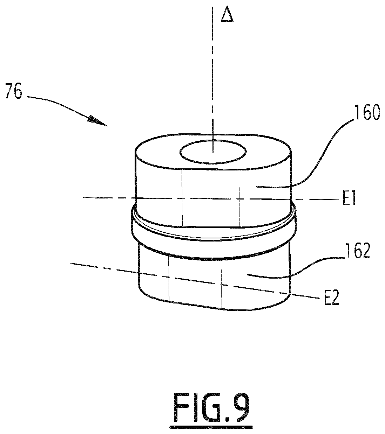

Un ensemble 10 de disque pour frein selon un deuxième mode de réalisation de l'invention va maintenant être décrit en regard des figures 6 à 9.

Seuls les éléments par lesquels le deuxième mode de réalisation diffère du premier mode de réalisation vont être décrits par la suite.

Les éléments similaires ou identiques seront référencés dans la suite avec la même référence numérique.

Dans le deuxième mode de réalisation représenté, la surface interne des segments est dépourvue de crochet tel que décrit en regard du précédent mode de réalisation.

Chaque segment 32 délimite des orifices 130, 132 destinés à recevoir des organes de fixation.

Chaque segment 32 comprend, sur chaque bord radial 34, 36, au moins une découpe 134, plus particulièrement ici deux découpes sur chaque bord radial 34, 36.

Les découpes 134 de bords radiaux adjacents de segments adjacents 32 d'une même face 14, 16 sont alignées de sorte qu'elles définissent ensemble au moins un orifice 130 entre les deux segments 32 correspondants.

L'au moins un orifice 130 traverse la face 14, 16 correspondante selon la direction transversale Y.

L'orifice 130 présente ici un alésage de sorte à

Chaque segment 32 délimite, en outre, au moins un orifice traversant 132 agencé à l'opposé de bords radiaux des segments opposés selon la direction transversale Y. Plus particulièrement ici, chaque segment 32 délimite deux orifices traversants 132 à l'opposé d'une interface entre deux bords radiaux.

Chaque orifice traversant 132 s'étend selon la direction transversale Y.

Chaque orifice traversant 132 d'un segment 32 est aligné, selon la direction transversale Y, avec un orifice 130 délimité par les découpes 134 correspondant.

L'orifice 132 présente ici un alésage de sorte à définir un épaulement 138 du côté de la surface externe.

L'ensemble de disque 10 comprend, pour chaque bord radial 34, 36 de chacun des segments 32 des faces 14, 16, au moins un organe de fixation positionné entre ledit bord radial et un bord radial d'un autre segment de la même face adjacent audit bord radial.

Dans l'exemple représenté, chaque bord radial 34, 36 de chacun des segments 32 des faces 14, 16 coopère avec deux organes de fixation. Chaque organe de fixation s'étend entre deux bords radiaux adjacents.

Chaque organe de fixation comprend une bague 140 s'étendant entre les deux faces 14, 16, plus particulièrement selon la direction transversale Y.

La bague 140 s'étend entre une première extrémité 142 et une deuxième extrémité 144 selon la direction transversale Y.

A la première extrémité 142, la bague 140 traverse, ici au moins partiellement, une des deux faces 14 au niveau de l'interface entre deux bords radiaux 34, 36 de segments adjacents 32 de la face 14, plus particulièrement au niveau d'un des orifices 130 délimités par les découpes 134 des bords radiaux.

A la deuxième extrémité 144, la bague 140 traverse, ici au moins partiellement, l'autre des deux faces 16 au niveau d'un segment 32, plus particulièrement au niveau d'un des orifices 132.

Un rapport entre le diamètre de la bague 140, mesurée au niveau de chacun des orifices qu'elle traverse 132, 130, et le diamètre de l'orifice respectif 132, 130 au niveau de la bague 140 est compris entre 90% et 99%, de préférence entre 95 % et 99 %.

Le jeu entre la bague 140 et chacun des orifices respectifs 132, 134 permet une certaine liberté de déformation sur le plan perpendiculaire à la direction transversale Y. Ainsi, en cas de changement de température, les contraintes exercées et le déjettement sont limités.

La bague 140 délimite un orifice de passage le traversant.

Plus particulièrement, l'orifice de passage présente une forme cylindrique ayant un axe principal selon la direction transversale Y.

Chaque organe de fixation comprend en outre une vis 150 et un écrou 152.

La vis 150 et l'écrou 152 sont prévus pour coopérer.

La vis 150 traverse l'orifice de passage délimité par la bague 140.

La vis 150 comprend une tête 154 en regard d'un bord d'un orifice 130, 132 de l'un des segments auquel la bague 140 est associée. Plus particulièrement, la tête 154 s'étend ici contre l'épaulement 136, 138 correspondant.

L'écrou 152 est positionné en regard d'un bord de l'orifice 130, 132 de l'autre segment auquel la bague 140 est associée. Plus particulièrement, l'écrou 152 s'étend ici contre l'épaulement 136, 138 correspondant.

L'écrou 150 et la vis 152 sont propres lors de leur serrage à exercer un effort sur la bague 140 selon la direction transversale Y.

Un rapport entre la distance entre la tête de la vis et l'écrou mesurée selon la direction transversale Y et la distance entre les bords des orifices auxquels la bague est associée est compris entre 101% et 110 %, de préférence entre 104 % et 107 %

Cela permet notamment d'avoir un jeu de chaque organe de fixation selon la direction transversale Y.

En outre, dans le deuxième mode de réalisation représenté, les manchons 76 diffèrent de ceux décrits dans le cadre du premier mode de réalisation.

Cependant, les manchons 76 en regard du deuxième mode de réalisation pourraient être similaires à ceux du premier mode de réalisation, et l'ensemble décrit dans le premier mode de réalisation pourrait être adapté avec des manchons tels qu'ils vont l'être décrits dans le deuxième mode de réalisation.

Plus particulièrement, dans le deuxième mode de réalisation représenté, les portions d'extrémité 160, 162 de chacun des manchons 76 et les orifices de fixation 70 sont de forme oblongue.

Plus particulièrement, chaque orifice de fixation 70 des pattes centrale et distales d'un même segment 32 présentent une forme oblongue suivant un premier axe longitudinal $D_1$, $D_2$, $D_3$ respectif. Chacun des premiers axes longitudinaux $D_1$, $D_2$, $D_3$ est perpendiculaire à l'axe central traversant ledit orifice de fixation 70. Plus particulièrement, chacun des premiers axes longitudinaux $D_1$, $D_2$, $D_3$ est perpendiculaire à la direction transversale Y.

Le premier axe longitudinal $D_1$, $D_2$, $D_3$ de chaque orifice de fixation 70 forme de préférence un, angle non nul, par exemple compris entre 10° et 170°, par rapport au premier axe longitudinal $D_1$, $D_2$, $D_3$ des autres orifices de fixation 70, au moins au sein d'un même segment 32.

La longueur maximale de chacun des orifices de fixation 70 des pattes de fixation distales mesurée suivant le premier axe longitudinal $D_1$, $D_3$ correspondant est comprise entre 102% et 108% de la longueur maximale des portions d'extrémités 160, 162 destinées à être insérées dans lesdits orifices.

La portion d'extrémité 160, 162 forme, avec un bord de l'orifice de fixation 70 dans laquelle elle s'étend, un espace libre 164, 166.

L'espace libre 164, 166 s'étend du côté de la patte de fixation centrale. Plus particulièrement, l'espace libre 164, 166 s'étend à l'extrémité de l'orifice de fixation 70 selon le premier axe longitudinal $D_1$, $D_3$ correspondant la plus proche de la patte de fixation centrale.

Pour chaque manchon 76, chaque portion d'extrémité 160, 162 est de forme oblongue suivant un deuxième axe longitudinal $E_1$, $E_2$ respectif. Les deuxièmes axes longitudinaux $E_1$, $E_2$ sont perpendiculaires à un axe central $\Delta$ dudit manchon 76.

L'axe central $\Delta$ du manchon 76 correspond sensiblement à l'axe principale de l'élément de fixation 74.

L'axe central $\Delta$ du manchon 76 s'étend selon la direction transversale Y.

La longueur maximale d'une portion d'extrémités 160, 162 est mesurée selon son deuxième axe longitudinal respectif.

Les deuxièmes axes longitudinaux $E_1$, $E_2$ des portions d'extrémité 160, 162 d'un même manchon 76 forment l'un avec l'autre un angle compris entre 10° et 70° de préférence entre 15° et 25°.

Les orientations E1 et E2 sont, par exemple, définies de façon à être dans la direction de dilation des secteurs.

Les faces du disque présentant des segments décalés entre les faces, par exemple de 40°, les directions de dilation entre ces deux faces ne sont ici pas les mêmes à l'endroit de positionnement de chaque manchon, et donc au niveau des portions d'extrémité 160, 162 d'un même manchon 76.

La forme du manchon permet notamment d'avoir une même pièce pour l'ensemble du disque, notamment quelques soient les conditions aux limites recherchées, et ainsi de limiter le nombre de références de pièce.

Dans un mode de réalisation alternatif, l'ensemble de disque comprend des organes de fixation selon le premier mode de réalisation et des organes de fixation selon le deuxième mode de réalisation.

La présence d'un jeu dans le maintien des faces du disque, par les crochets et/ou par la présence d'espaces vides autour des éléments composant les organes de fixation, permet une certaine liberté de déformation, notamment sur le plan perpendiculaire à la direction transversale. Ainsi, en cas de changement de température, lorsque les faces se dilatent, les contraintes exercées et le déjettement sont limitées. Cela permet d'assurer la planéité du disque. Le déjettement est susceptible d'entraîner une usure accélérée du disque. Ainsi, un ensemble de disque selon les modes de réalisation décrits permet de limiter l'usure du disque.

**Revendications**

1. Ensemble (10) de disque pour frein comprenant un moyeu (12) central d'entraînement et un disque d'usure comprenant une première face et une deuxième face (14, 16), les faces (14, 16) étant maintenues ensemble axialement autour du moyeu (12), chaque face (14, 16) présentant une surface interne respective (24, 26) faisant face à la surface interne (24, 26) de l'autre face (14, 16), chaque face (14, 16) étant formée d'au moins deux segments (32) distincts, chaque segment (32) s'étendant entre deux bords radiaux (34, 36),

   les bords radiaux (34, 36) des segments (32) d'une face (14, 16) ne s'étendant pas en regard des bords radiaux (34, 36) des segments (32) de l'autre face (14, 16), chaque segment (32) de face étant apte à être fixé à un segment de l'autre face via au moins un organe de fixation propre à maintenir lesdites faces (14, 16), **caractérisé en ce que** chaque face (14, 16) comprend un même nombre déterminé (n) de segments (32), chaque segment (32) ayant une étendue angulaire ($\alpha$) égale pour tous les segments (32) de la face (14, 16), et **en ce que** le décalage angulaire ($\theta$) entre des segments (32) de faces (14, 16) se faisant face est sensiblement égal au rapport de l'étendue angulaire sur le nombre déterminé de segments.

2. Ensemble de disque selon la revendication 1, dans lequel chaque organe de fixation comprend pour chaque segment (32) de face auquel il est associé au moins un crochet (40, 42) positionné sur la surface interne (24, 26) dudit segment (32) apte à coopérer avec un crochet (40, 42) correspondant d'un segment (32) de l'autre face (14, 16).

3. Ensemble de disque selon la revendication 1 ou 2, dans lequel chaque organe de fixation comprend une bague (140) s'étendant entre les deux faces, la bague (140) traversant, parallèlement à l'axe de rotation du moyeu (12), chaque segment (32) auquel elle est associée via un orifice respectif (130, 132), un rapport entre le diamètre de la bague (140), mesurée au niveau dudit orifice respectif (130, 132), et le diamètre de l'orifice respectif (130, 132) étant compris entre 90% et 99%, de préférence entre 95 % et 99%.

4. Ensemble de disque selon la revendication 3, dans lequel chaque organe de fixation comprend une vis (150) et un écrou (152), la vis (150) traversant un orifice de passage délimité par la bague (140) et étant associée à l'écrou (152), la vis (150) comprenant une tête (154) en regard d'un bord d'un orifice (130, 132) de l'un des segments auquel la bague (140) est associée, l'écrou (152) étant positionné en regard d'un bord de l'orifice (130, 132) de l'autre segment auquel la bague (140) est associée, l'écrou (152) et la vis (150) étant propres lors de leur serrage à exercer un effort sur la bague (140) parallèlement à l'axe de rotation du moyeu (12), un rapport entre la distance entre la tête (154) de la vis (150) et l'écrou (152) mesurée parallèlement à l'axe de rotation du moyeu (12) et la distance entre les bords des orifices (130, 132) auxquels la bague est associée est compris entre 101% et 110 %, de préférence entre 104 % et 107 %.

5. Ensemble de disque selon la revendication 3 ou 4, comprenant, pour chaque bord radial (34, 36) de chacun des segments (32) de chaque face (14, 16), au moins un organe de fixation positionné entre ledit bord radial et un bord radial d'un autre segment de la même face adjacent audit bord radial.

6. Ensemble de disque selon l'une quelconque des revendications précédentes, dans lequel chaque segment (32) comprend au moins une patte de fixation (64) au moyeu, chaque patte de fixation délimitant un orifice de fixation traversant (70) entre la surface interne et la surface externe,

dans lequel chaque patte de fixation (64) présente une surface interne (66) et une surface externe (68), la surface interne (66) d'une patte de fixation étant face à une surface interne d'une patte de fixation d'un segment opposé,
les orifices de fixation de pattes de fixation coopérant l'une avec l'autre étant alignés, l'ensemble comprenant pour chaque paire d'orifices de fixation (70) coopérant l'un avec l'autre un dispositif de fixation (72), le dispositif de fixation comprenant un manchon (76) de fixation muni de deux portions d'extrémité (160, 162) opposées, propres à être insérées chacune respectivement dans l'un des orifices de fixation (70).

7. Ensemble de disque selon la revendication 6, dans lequel les portions d'extrémité (160, 162) et les orifices de fixation (70) sont de forme oblongue.

8. Ensemble de disque selon l'une quelconque des revendications 6 à 7, dans lequel chaque segment (32) comprend une patte de fixation centrale et deux pattes de fixation distales disposées de part et d'autre de la patte de fixation centrale, chaque orifice de fixation (70) des pattes de fixation centrale et distales d'un même segment (32) ayant une forme oblongue suivant un premier axe longitudinal ($D_1$, $D_2$, $D_3$) respectif perpendiculaire à un axe central traversant ledit orifice de fixation (70), le premier axe longitudinal ($D_1$, $D_2$, $D_3$) de chaque orifice de fixation (70) formant un angle non nul par rapport au premier axe longitudinal ($D_1$, $D_2$, $D_3$) des autres orifices de fixation (70).

9. Ensemble de disque selon la revendication 8, dans lequel la longueur maximale de chacun des orifices de fixation (70) des pattes de fixation distales mesurée suivant le premier axe longitudinal ($D_1$, $D_3$) correspondant est comprise entre 102% et 108% de la longueur maximale des portions d'extrémités (160, 162) destinées à être insérées dans lesdits orifices (70), ladite portion d'extrémité (160, 162) formant avec un bord de l'orifice de fixation (70) auquel elle est associée un espace libre (164, 166) du côté de la patte de fixation centrale.

10. Ensemble de disque selon l'une quelconque des revendications 6 à 9, dans lequel, pour chaque manchon (76), chaque portion d'extrémité (160, 162) est de forme oblongue suivant un deuxième axe longitudinal ($E_1$, $E_2$) perpendiculaire à un axe central (Δ) dudit manchon (76), les deuxièmes axes longitudinaux ($E_1$, $E_2$) des portions d'extrémité (160, 162) d'un même manchon (76) formant l'un avec l'autre un angle compris entre 10° et 70°, de préférence entre 15° et 25°.

11. Ensemble de disque selon l'une quelconque des revendications 6 à 10, dans lequel chaque dispositif de fixation (72) comprend un élément de fixation (74) associé propre à être inséré dans ledit manchon (76), le moyeu (12) comprenant au moins une patte de solidarisation (20) s'étendant contre au moins une patte de fixation (64), l'élément de fixation (74) comprenant :
un corps central propre à traverser le manchon (76) et la patte de solidarisation (20), et une tête s'étendant contre la patte de solidarisation (20) à une extrémité du corps.

12. Véhicule ferroviaire comprenant un système de freinage à disque comprenant un ensemble de disque (10) selon l'une quelconque des revendications 1 à 11.

**Patentansprüche**

1. Scheibenanordnung (10) für eine Bremse mit einer zentralen Antriebsnabe (12) und einer Verschleißscheibe mit einer ersten Fläche und einer zweiten Fläche (14, 16), wobei die Flächen (14, 16) axial um die Nabe (12) herum zusammengehalten werden, wobei jede Fläche (14, 16) eine jeweilige Innenfläche (24, 26) aufweist, die der Innenfläche (24, 26) der anderen Fläche (14, 16) zugewandt ist, wobei jede Fläche (14, 16) aus mindestens zwei unterschiedlichen Segmenten (32) gebildet ist, wobei sich jedes Segment (32) zwischen zwei radialen Rändern (34, 36) erstreckt, wobei sich die radialen Ränder (34, 36) der Segmente (32) einer Fläche (14, 16) nicht den radialen Rändern (34, 36) der Segmente (32) der anderen Fläche (14, 16) zugewandt erstrecken, wobei jedes Flächensegment (32) geeignet ist, an einem Segment der anderen Fläche über mindestens ein Befestigungsorgan befestigt zu werden, das geeignet ist, die Flächen (14, 16) zu halten, **dadurch gekennzeichnet, dass** jede Fläche (14, 16) eine gleiche bestimmte Anzahl (n) von Segmenten (32) umfasst, wobei jedes Segment (32) eine Winkelausdehnung ($\alpha$) hat, die für alle Segmente (32) der Fläche (14, 16) gleich ist, und dass der Winkelversatz ($\theta$) zwischen den Segmenten (32) der Flächen (14, 16), die sich gegenüberliegen, etwa gleich dem Verhältnis der Winkelausdehnung zu der bestimmten Anzahl von Segmenten ist.

2. Scheibenanordnung nach Anspruch 1, wobei jedes Befestigungsorgan für jedes Flächensegment (32), dem es zugeordnet ist, mindestens einen Haken (40, 42) umfasst, der auf der Innenfläche (24, 26) des Segments (32) positioniert ist, der geeignet ist, mit einem entsprechenden Haken (40, 42) eines Segments (32) der anderen Fläche (14, 16) zusammenzuwirken.

3. Scheibenanordnung nach Anspruch 1 oder 2, wobei jedes Befestigungsorgan einen Ring (140) umfasst, der sich zwischen den beiden Flächen erstreckt, wobei der Ring (140) parallel zur Drehachse der Nabe (12) jedes Segment (32), dem er zugeordnet ist, über eine jeweilige Öffnung (130, 132) durchquert, wobei ein Verhältnis zwischen dem Durchmesser des Rings (140), gemessen im Bereich der jeweiligen Öffnung (130, 132), und dem Durchmesser der jeweiligen Öffnung (130, 132) zwischen 90 % und 99 %, vorzugsweise zwischen 95 % und 99 %, liegt.

4. Scheibenanordnung nach Anspruch 3, wobei jedes Befestigungsorgan eine Schraube (150) und eine Mutter (152) umfasst, wobei die Schraube (150) eine von dem Ring (140) begrenzte Durchgangsöffnung durchquert und der Mutter (152) zugeordnet ist, wobei die Schraube (150) einen Kopf (154) umfasst, der einem Rand einer Öffnung (130, 132) eines der Segmente, dem der Ring (140) zugeordnet ist, zugewandt ist, wobei die Mutter (152) einem Rand der Öffnung (130, 132) des anderen Segments, dem der Ring (140) zugeordnet ist, zugewandt ist, wobei die Mutter (152) und die Schraube (150) während ihres Festziehens geeignet sind, eine Kraft auf den Ring (140) parallel zur Drehachse der Nabe (12) auszuüben, wobei ein Verhältnis zwischen dem Abstand zwischen dem Kopf (154) der Schraube (150) und der Mutter (152), gemessen parallel zur Drehachse der Nabe (12), und dem Abstand zwischen den Rändern der Öffnungen (130, 132), denen der Ring zugeordnet ist, zwischen 101 % und 110 %, vorzugsweise zwischen 104 % und 107 %, liegt.

5. Scheibenanordnung nach Anspruch 3 oder 4, die für jeden radialen Rand (34, 36) jedes der Segmente (32) jeder Fläche (14, 16) mindestens ein Befestigungsorgan umfasst, das zwischen dem radialen Rand und einem radialen Rand eines anderen Segments derselben Fläche, die an den radialen Rand angrenzt, positioniert ist.

6. Scheibenanordnung nach einem der vorhergehenden Ansprüche, wobei jedes Segment (32) mindestens eine Befestigungslasche (64) an der Nabe umfasst, wobei jede Befestigungslasche eine durchgehende Befestigungsöffnung (70) zwischen der Innenfläche und der Außenfläche begrenzt,

wobei jede Befestigungslasche (64) eine Innenfläche (66) und eine Außenfläche (68) aufweist, wobei die Innenfläche (66) einer Befestigungslasche einer Innenfläche einer Befestigungslasche eines gegenüberliegenden Segments gegenüberliegt, wobei die Befestigungsöffnungen der zusammenwirkenden Befestigungslaschen zueinander ausgerichtet sind, wobei die Anordnung für jedes Paar von zusammenwirkenden Befestigungsöffnungen (70) eine Befestigungsvorrichtung (72) umfasst, wobei die Befestigungsvorrichtung eine Befestigungshülse (76) mit zwei einander gegenüberliegenden Endabschnitten (160, 162) umfasst, die geeignet sind, jeweils in eine der Befestigungsöffnungen (70) eingeführt zu sein.

7. Scheibenanordnung nach Anspruch 6, wobei die Endabschnitte (160, 162) und die Befestigungsöffnungen (70) länglich geformt sind.

8. Scheibenanordnung nach einem der Ansprüche 6 bis 7, wobei jedes Segment (32) eine zentrale Befestigungslasche und zwei distale Befestigungslaschen umfasst, die auf beiden Seiten der zentralen Befestigungslasche angeordnet sind, wobei jede Befestigungsöffnung (70) der zentralen Befestigungslaschen und der distalen Befestigungslaschen desselben Segments (32) eine längliche Form gemäß einer jeweiligen ersten Längsachse ($D_1$, $D_2$, $D_3$) senkrecht zu einer Mittelachse hat, die die Befestigungsöffnung (70) durchquert, wobei die erste Längsachse ($D_1$, $D_2$, $D_3$) jeder Befestigungsöffnung (70) einen Winkel ungleich Null in Bezug auf die erste Längsachse ($D_1$, $D_2$, $D_3$) der anderen Befestigungsöffnungen (70) bildet.

9. Scheibenanordnung nach Anspruch 8, wobei die maximale Länge jeder der Befestigungsöffnungen (70) der distalen Befestigungslaschen, gemessen gemäß der entsprechenden ersten Längsachse ($D_1$, $D_3$), zwischen 102 % und 108 % der maximalen Länge der Endabschnitte (160, 162) beträgt, die in die Öffnungen (70) eingeführt werden sollen, wobei der Endabschnitt (160, 162) mit einem Rand der Befestigungsöffnung (70), der er zugeordnet ist, einen freien Raum (164, 166) auf der Seite der zentralen Befestigungslasche bildet.

10. Scheibenanordnung nach einem der Ansprüche 6 bis 9, wobei für jede Hülse (76) jeder Endabschnitt (160, 162) gemäß einer zweiten Längsachse ($E_1$, $E_2$), die senkrecht zu einer Mittelachse ($\Delta$) der Hülse (76), länglich ist, wobei die zweiten Längsachsen ($E_1$, $E_2$) der Endabschnitte (160, 162) derselben Hülse (76) miteinander einen Winkel zwischen 10° und 70°, vorzugsweise zwischen 15° und 25°, bilden.

11. Scheibenanordnung nach einem der Ansprüche 6 bis 10, wobei jede Befestigungsvorrichtung (72) ein zugehöriges Befestigungselement (74) umfasst, das geeignet ist, in die Hülse (76) eingeführt zu sein, wobei die Nabe (12) mindestens eine Verbindungslasche (20) umfasst, die sich gegen mindestens eine Befestigungslasche (64) erstreckt, wobei das Befestigungselement (74) umfasst:
einen zentralen Körper, der geeignet ist, die Hülse (76) und die Verbindungslasche (20) zu durchqueren, und einen Kopf, der sich an einem Ende des Körpers gegen die Befestigungslasche (20) erstreckt.

12. Schienenfahrzeug mit einem Scheibenbremssystem, das eine Scheibenanordnung (10) nach einem der Ansprüche 1 bis 11 umfasst.

**Claims**

1. A brake disc assembly (10) comprising a central drive hub (12) and a wear disc comprising first and second faces (14, 16), the faces (14, 16) being held together axially around the hub (12), each face (14, 16) having a respective inner surface (24, 26) facing the inner surface (24, 26) of the other face (14, 16), each face (14, 16) being formed of at least two distinct segments (32), each segment (32) extending between two radial edges (34, 36),

the radial edges (34, 36) of the segments (32) of one face (14, 16) not extending opposite the radial edges (34, 36) of the segments (32) of the other face (14, 16), each face segment (32) being adapted to be secured to a segment of the other face via at least one fastening member adapted to hold said faces (14, 16), **characterized in that** each face (14, 16) comprises the same predetermined number (n) of segments (32), each segment (32) having an equal angular extent ($\alpha$) for all segments (32) of the face (14, 16), and **in that** the angular offset ($\theta$) between segments (32) of facing faces (14, 16) is substantially equal to the ratio of the angular extent to the predetermined number of segments

2. A brake disc assembly according to claim 1, wherein each fastening member comprises, for each segment (32) of the face with which it is associated, at least one hook (40, 42) positioned on the inner surface (24, 26) of the said segment (32) and capable of cooperating with a corresponding hook (40, 42) of a segment (32) of the other face (14, 16).

3. A brake disc assembly according to claim 1 or 2, wherein each fastening member comprises a ring (140) extending between the two faces, the ring (140) passing, parallel to the axis of rotation of the hub (12), through each segment (32) with which it is associated via a respective hole (130, 132), a ratio between the diameter of the ring (140), measured at said respective hole (130, 132), and the diameter of the respective hole (130, 132) being between 90% and 99%, preferably between 95% and 99%.

4. A brake disc assembly according to claim 3, wherein each fastening member comprises a screw (150) and a nut (152), the screw (150) passing through a passage hole defined by the ring (140) and being associated with the nut (152), the screw (150) comprising a head (154) facing an edge of a hole (130, 132) of one of the segments with which the ring (140) is associated, the nut (152) being positioned facing an edge of the hole (130, 132) of the other segment with which the ring (140) is associated, the nut (152) and the screw (150) being suitable, when tightened, for exerting a force on the ring (140) parallel to the axis of rotation of the hub (12), a ratio between the distance between the head (154) of the screw (150) and the nut (152) measured parallel to the axis of rotation of the hub (12) and the distance between the edges of the holes (130, 132) with which the ring is associated is between 101% and 110%, preferably between 104% and 107%.

5. A brake disc assembly according to claim 3 or 4, comprising, for each radial edge (34, 36) of each of the segments (32) of each face (14, 16), at least one fastening member positioned between said radial edge and a radial edge of another segment of the same face adjacent to said radial edge.

6. A brake disc assembly according to any one of the preceding claims, wherein each segment (32) comprises at least one fastening tab (64) at the hub, each fastening tab defining a fastening through-hole (70) between the inner surface and the outer surface,

wherein each fastening tab (64) has an inner surface (66) and an outer surface (68), with the inner surface (66) of one fastening tab facing an inner surface of a fastening tab of an opposite segment.

the fastening holes of mating fastening tabs being aligned,

the assembly comprising, for each pair of fastening holes (70) cooperating with each other, a fastening device (72), the fastening device comprising a fastening sleeve (76) provided with two opposite end portions (160, 162), each suitable for being inserted respectively in one of the fastening holes (70).

**7.** A brake disc assembly according to claim 6, wherein the end portions (160, 162) and the fastening holes (70) are oblong in shape.

**8.** A brake disc assembly according to any one of claim 6 to 7, wherein each segment (32) comprises a central fastening tab and two distal fastening tabs disposed on either side of the central fastening tab, each fastening hole (70) of the central and distal fastening tabs of a same segment (32) having an oblong shape along a respective first longitudinal axis ($D_1, D_2, D_3$) perpendicular to a central axis passing through said fastening hole (70), the first longitudinal axis ($D_1, D_2, D_3$) of each fastening hole (70) forming a non-zero angle with respect to the first longitudinal axis ($D_1, D_2, D_3$) of the other fastening holes (70).

**9.** A brake disc assembly according to claim 8, in which the maximum length of each of the fastening holes (70) of the distal fastening tabs measured along the corresponding first longitudinal axis ($D_1, D_3$) is between 102% and 108% of the maximum length of the end portions (160, 162) intended to be inserted in the said holes (70), the said end portion (160, 162) forming, with an edge of the fastening hole (70) with which it is associated, a free space (164, 166) on the side of the central fastening tab.

**10.** A brake disc assembly according to any one of claims 6 to 9, wherein, for each sleeve (76), each end portion (160, 162) is oblong in shape along a second longitudinal axis ($E_1, E_2$) perpendicular to a central axis ($\Delta$) of said sleeve (76), the second longitudinal axes ($E_1, E_2$) of the end portions (160, 162) of a same sleeve (76) forming with each other an angle comprised between 10° and 70°.

**11.** A brake disc assembly according to any one of claims 6 to 10, wherein each fastening member (72) comprises an associated fastening member (74) insertable into said sleeve (76), the hub (12) comprising at least one securing tab (20) extending against at least one fastening tab (64), the fastening member (74) comprising:

a central body adapted to pass through the sleeve (76) and the securing tab (20), and a head extending against the securing tab (20) at one end of the body.

**12.** A railway vehicle comprising a disc brake system comprising a brake disc assembly (10) according to any one of claims 1 to 11.

FIG.1

FIG.2

FIG.3

FIG.4

**FIG.5**

FIG.6

FIG.7

**FIG.8**

**FIG.9**

**EP 3 939 854 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2359321
- WO 9530841 A1
- WO 2015090890 A1